# FASCICULE DE BREVET EUROPEEN

(11) **EP 3 638 472 B1**
(45) Date de publication et mention de la délivrance du brevet: **14.07.2021**
(21) Numéro de dépôt: 18752600.9
(22) Date de dépôt: 20.07.2018
(51) Int. Cl.: B28B 1/00, B25J 9/00, B25J 9/16, E04G 21/04, B33Y 30/00, E04B 1/35, B28B 3/20

(54) **ROBOT PARALLÈLE À CÂBLES ET PROCÉDÉ DE COMMANDE D'UN TEL ROBOT**
KABELBASIERTER PARALLELROBOTER UND VERFAHREN ZUR STEUERUNG EINES SOLCHEN ROBOTERS
CABLE-BASED PARALLEL ROBOT AND METHOD FOR CONTROLLING SUCH A ROBOT

(30) Priorité: 02.08.2017 FR 1757402
(43) Date de publication de la demande: 22.04.2020
(73) Titulaire: Xtreee, 94623 Rungis Cedex (FR)
(72) Inventeur: ROUX, Philippe, 94623 Rungis Cedex (FR); MALLET, Alban, 94623 Rungis Cedex (FR); BOUYSSOU, Charles, 94623 Rungis Cedex (FR); AKHAVAN ZAKERI, Mahriz, 94623 Rungis Cedex (FR); BLANCHET, Laurent, 94623 Rungis Cedex (FR); MOREL, Philippe, 94623 Rungis Cedex (FR)
(74) Mandataire: Bringer IP
(86) Numéro de dépôt international: PCT/FR2018/051865
(87) Numéro de publication internationale: WO 2019/025698

(56) Documents cités:
- US-B2- 7 753 642
- TORU MAKINO ET AL: "Cable collision avoidance of a pulley embedded cable-driven parallel robot by kinematic redundancy", CONTROL, MECHATRONICS AND AUTOMATION, ACM, 2 PENN PLAZA, SUITE 701 NEW YORK NY 10121-0701 USA, 7 décembre 2016 (2016-12-07), pages 117-120, XP058326676, DOI: 10.1145/3029610.3029620 ISBN: 978-1-4503-5213-0

## Description

### 1. Domaine technique de l'invention

L'invention concerne les robots parallèles à câbles, en particulier pour des applications dans le domaine de la fabrication additive de matériaux de construction, tels que des matériaux cimentaires ou argileux. L'invention concerne également un procédé de commande d'un robot parallèle à câbles selon l'invention.

### 2. Arrière-plan technologique

Un robot parallèle à câbles est un robot d'architecture cinématique parallèle, c'est à dire un robot dont toutes les chaines cinématiques d'actionnement, qui sont formées d'un câble et d'un actionneur, tel qu'un treuil permettant de dérouler et de déterminer la longueur déroulée du câble, sont fixées d'une part à un effecteur supportant une charge utile, et d'autre part à l'environnement extérieur (bâtiments environnants, mâts dédiés ancrés au sol, ancres dédiées fixées au sol, etc.).

Le document de brevet FR3029811 décrit un tel robot à câbles pour déplacer une tête d'extrusion d'un matériau pâteux destiné à la fabrication de bâtiments. Le robot proposé par ce document comprend au moins trois supports de suspension d'au moins trois câbles et une grue maintenue à distance du sol et configurée pour pouvoir être déplacée au dessus de l'aire formée entre les supports, la grue portant la tête d'extrusion.

L'un des inconvénients d'un tel robot à câbles est qu'en cas de rupture d'un des câbles, la tête d'extrusion est susceptible de s'écraser au sol, ou à tout le moins d'effectuer de grands mouvements de balancier, et de provoquer des dégâts non seulement sur la construction en cours de fabrication, mais également sur les éléments ou objets présents au sein de l'espace d'évolution du robot, et de blesser les ouvriers présents sur le chantier. Aussi, un tel robot à câbles impose de réserver un espace important sans aucune présence humaine ni aucun élément extérieur.

En outre, la mise en œuvre d'un tel robot impose l'utilisation d'une grue, de piliers ancrés au sol supportant les câbles, ce qui constitue une infrastructure lourde et peu versatile. En particulier, un tel robot est peu compatible avec des déplacements fréquents du robot d'un lieu d'utilisation à un autre. Un tel robot n'est pas non plus compatible avec certaines architectures d'usine ou de chantier présentant des espaces encombrés ne permettant pas de restreindre notamment la circulation des ouvriers dans des zones importantes.

US 7 753 642 B2 divulgue un robot à câbles selon le préambule de la revendication 1.

Les inventeurs ont donc cherché à fournir un robot à câbles versatile pouvant être utilisé dans une grande variété de situations, tout en offrant une sécurité accrue pour les ouvriers présents sur le chantier.

### 3. Objectifs de l'invention

L'invention vise à fournir un robot à câbles versatile pouvant à la fois être utilisé dans des usines et sur des chantiers.

L'invention vise en particulier à fournir un robot à câbles pouvant être utilisé dans des zones encombrées tout en permettant le déplacement de la charge utile du robot au sein de l'espace de travail.

L'invention vise en particulier à fournir un robot à câbles présentant une sécurité accrue pour les ouvriers présent au voisinage du robot.

L'invention vise aussi à fournir, dans au moins un mode de réalisation de l'invention, un robot adapté à la fabrication additive de structures architecturales par empilement de couches de cordons extrudés.

L'invention vise aussi à fournir un procédé de commande d'un robot à câbles selon l'invention.

### 4. Exposé de l'invention

Pour ce faire, l'invention concerne un robot parallèle à câbles comprenant :
- un outil mobile destiné à être déplacé suivant une trajectoire, dite trajectoire cible, dans un environnement de travail à trois dimensions,
- une pluralité de câbles présentant chacun une première extrémité adaptée pour pouvoir être reliée à l'outil mobile et une seconde extrémité adaptée pour pouvoir être reliée à un point d'ancrage d'une structure fixe agencée au voisinage dudit environnement de travail, et comprenant au moins un câble, dit câble suspendu, configuré pour pouvoir être agencé de sorte que ladite seconde extrémité du câble est plus haute que ladite première extrémité du câble, et au moins un câble, dit câble étai, configuré pour pouvoir être agencé de sorte que ladite seconde extrémité du câble est plus basse que ladite première extrémité du câble au cours du déplacement de l'outil mobile suivant au moins une portion de ladite trajectoire cible,
- une pluralité d'actionneurs configurés pour pouvoir régler sur commande la longueur des câbles s'étendant entre l'outil mobile et lesdits points d'ancrage,
- une unité de commande configurée pour pouvoir fournir auxdits actionneurs des consignes de commande de longueur de câble qui permettent le déplacement de l'outil mobile dans l'environnement de travail suivant ladite trajectoire cible.

Un robot à câbles selon l'invention est caractérisé en ce que ladite unité de commande est configurée pour rendre lâche tout câble, dit câble gênant, qui intersecte avec au moins un volume d'au moins un élément de l'environnement de travail au cours du déplacement de l'outil mobile suivant un intervalle de ladite trajectoire cible, dit intervalle de collision, en fournissant à l'actionneur de ce câble une consigne de longueur de câble supérieure à la longueur de câble théorique pour ce câble gênant au cours du déplacement de l'outil mobile sur cet intervalle de collision.

Un robot selon l'invention permet donc de déplacer l'outil mobile par l'utilisation d'une pluralité de câbles comprenant au moins un câble suspendu et au moins un câble étai. L'outil mobile est donc maintenu par des câbles dont certains tirent l'outil mobile vers le haut alors que d'autres tirent l'outil mobile vers le bas. En cas de rupture d'un câble, l'effet de balancier observé par les robots de l'art antérieur dénués de câbles étais est donc fortement réduit pour un robot selon l'invention.

Un robot selon l'invention permet d'avoir un câble gênant au cours du déplacement de l'outil mobile sur la trajectoire cible qui est rendu lâche par l'unité de commande. Cela permet d'écarter ce câble gênant sur l'intervalle de trajectoire correspondant. Un robot selon l'invention permet donc une évolution du robot dans tout type d'environnement, en particulier dans des environnements fortement encombrés par la présence d'objets. Le robot selon l'invention présente la capacité de libérer certains câbles sur certaines portions de trajectoire pour permettre le déplacement de l'outil mobile lorsque des obstacles sont présents sur la trajectoire cible. Un tel câble gênant est en général un câble étai, en particulier lorsque le robot est mis en œuvre pour la fabrication additive de structures architecturales par empilement de cordons extrudés. Cela étant, un câble gênant peut également être un câble suspendu pour certaines structures architecturales spécifiques.

Un robot à câbles selon l'invention est donc destiné à être installé dans un environnement de travail de telle sorte que la pluralité de câbles comprend, à chaque instant du déplacement de l'outil mobile suivant la trajectoire cible, au moins un câble suspendu agencé de sorte que ladite seconde extrémité du câble est plus haute que ladite première extrémité du câble, et au moins un câble étai, agencé de sorte que ladite seconde extrémité du câble est plus basse que ladite première extrémité du câble.

Un câble d'un robot selon l'invention peut être un câble suspendu au cours du déplacement de l'outil mobile sur une première portion de la trajectoire cible et être un câble étai au cours du déplacement de l'outil mobile sur une deuxième portion de la trajectoire cible. En d'autres termes, certains câbles peuvent être à la fois configuré pour être un câble suspendu et un câble étai. L'état du câble (état suspendu ou état étai) dépend alors de la position de l'outil mobile par rapport au point d'ancrage du câble. Un câble est dans l'état suspendu lorsque, à un instant donné au cours du déplacement de l'outil mobile sur la trajectoire cible, la seconde extrémité du câble est plus haute que la première extrémité du câble. Un câble est dans l'état étai lorsque, à un instant donné au cours du déplacement de l'outil mobile sur la trajectoire cible, la seconde extrémité du câble est plus basse que la première extrémité du câble.

Dans toute la suite, on désigne par « câble suspendu » un câble qui est dans l'état suspendu et par « câble étai » un câble qui est dans l'état étai sur une portion de trajectoire donnée.

De préférence, le robot comprend au moins sept câbles de manière à pouvoir contrôler les six degrés de liberté de l'outil mobile. Avantageusement, un robot selon l'invention comprend au moins cinq câbles étais et au moins cinq câbles suspendus.

Un robot selon l'invention présente donc une sécurité renforcée par rapport aux robots de l'art antérieur et n'impose donc plus de devoir libérer l'espace de travail de tout ouvrier. La cohabitation d'un robot à câbles et d'ouvriers au sein de l'environnement de travail est donc possible avec un robot selon l'invention.

En outre, un robot selon l'invention met en œuvre des câbles présentant des extrémités configurées pour être reliées à des points d'ancrage de structures fixes agencées au voisinage de l'environnement de travail. Il est donc aisé avec un robot selon l'invention de s'adapter à l'environnement d'utilisation du robot.

Avantageusement, un robot selon l'invention comprend, pour au moins un câble, un dispositif d'escamotage de ce câble d'une position de service dans laquelle le câble exerce une force sur ledit outil mobile permettant son déplacement le long de ladite trajectoire cible, vers une position de renvoi dans laquelle le câble est écarté de l'environnement de travail lorsque ce câble est rendu lâche par ladite unité de commande.

Selon cette variante avantageuse de l'invention, lorsqu'un câble est rendu lâche par l'unité de commande, le câble est écarté de l'environnement de travail par un dispositif d'escamotage de ce câble, ce qui permet de libérer l'intervalle de collision de ce câble et donc de permettre le déplacement de l'outil mobile.

Avantageusement et selon l'invention, dans ladite position de renvoi, ledit câble se déploie au moins en partie dans un plan de renvoi horizontal qui s'étend de l'outil mobile si le câble est un câble étai et dans un plan de renvoi vertical qui s'étend de l'outil mobile si le câble est un câble suspendu.

Selon cette variante avantageuse, le dispositif d'escamotage est configuré pour pouvoir déplacer une partie du câble gênant dans un plan de renvoi qui s'étend de l'outil mobile, c'est à dire dans un plan qui passe par la seconde extrémité du câble, attachée à l'outil mobile. Ce plan de renvoi vers lequel le câble gênant est déplacé est avantageusement vertical si le câble gênant est un câble suspendu. Le plan de renvoi est avantageusement horizontal si le câble gênant à écarter de la trajectoire de l'outil mobile est un câble étai.

Avantageusement et selon l'invention, ledit dispositif d'escamotage comprend un tube télescopique porté par l'outil mobile enchâssant le câble et relié audit outil mobile par un ressort de rappel de sorte que le tube télescopique déplace spontanément le câble dans le plan de renvoi lorsque ledit câble est rendu lâche.

Selon cette variante avantageuse, un tube télescopique relié à l'outil mobile par un ressort de rappel permet de déplacer spontanément le câble gênant vers le plan de renvoi lorsque le câble est lâche. Lorsque le câble est en service, la force de traction du câble est supérieure à la force de rappel du ressort de sorte que le tube télescopique suit la direction du câble. Lorsque le câble est rendu lâche, la force de rappel déplace le tube télescopique et le câble enchâssé dans le tube vers le plan de renvoi. Le tube étant télescopique, l'extension du tube permet de déporter le câble de l'espace de travail.

Avantageusement, un robot selon l'invention comprend au moins cinq câbles étais de manière à pouvoir rendre lâche au moins un câble étai tout en conservant la possibilité de commander un déplacement dudit outil mobile.

Selon cette variante avantageuse, n'importe lequel des câbles étais parmi les cinq ou plus câbles étais peut être rendu lâche tout en conservant la possibilité de commander un déplacement dudit outil mobile en contrôlant à minima la position d'une partie de l'outil mobile.

Cette variante avantageuse permet de toujours pouvoir contrôler la position de l'outil mobile par les câbles étais lorsqu'un câble étai est rendu lâche, tout en conservant une sécurité renforcée.

Avantageusement, un robot selon l'invention comprend au moins cinq câbles suspendus de manière à pouvoir rendre lâche au moins un câble suspendu tout en conservant la possibilité de commander un déplacement dudit outil mobile.

Selon cette variante avantageuse, n'importe lequel des câbles suspendus parmi les cinq ou plus câbles suspendus peut être rendu lâche tout en conservant la possibilité de commander un déplacement dudit outil mobile en contrôlant à minima la position d'une partie de l'outil mobile.

Cette variante avantageuse permet de toujours pouvoir contrôler la position de l'outil mobile par les câbles suspendus lorsqu'un câble suspendu est rendu lâche, tout en conservant une sécurité renforcée.

Avantageusement et selon l'invention, les actionneurs sont des enrouleurs de câbles.

Avantageusement, un robot selon l'invention comprend en outre des capteurs de position des câbles reliés à ladite unité de commande de manière à pouvoir asservir la position de l'outil mobile aux mesures des capteurs.

Avantageusement et selon l'invention, ledit outil mobile comprend une plateforme et un effecteur porté par cette plateforme.

Selon cette variante, la plateforme porte un effecteur et c'est la plateforme qui sert de point de liaison avec les câbles suspendus et avec les câbles étais.

Avantageusement et selon l'invention, l'effecteur est une tête d'extrusion de matériaux de construction pour la fabrication additive de structures architecturales par empilement de couches de cordons extrudés par cette tête.

Cette variante avantageuse permet d'utiliser le robot à câbles pour la fabrication additive d'une structure architecturale par empilement de couches de cordons extrudés.

Une telle structure architecturale est par exemple un élément de construction individuel (pont, pilier, mur, mobilier urbain, etc.), une structure complète (bâtiment, maison, immeuble, etc.) ou tout type de pièce architecturale (œuvre artistique, sculpture, etc.). Le matériau de construction peut être de tous types. Il s'agit par exemple d'un matériau cimentaire, d'un matériau du type argile, d'un matériau à base de plâtre, et d'une manière générale de tout matériau à pâte visqueuse compatible avec la fabrication additive de structures architecturales.

L'invention concerne également un procédé de commande d'un robot à câbles selon l'invention.

Un tel procédé est caractérisé en ce qu'il comprend les étapes suivantes :
- une étape de définition d'une trajectoire cible de l'outil mobile dans l'environnement de travail,
- une étape d'identification des câbles qui intersectent avec au moins un volume d'au moins un élément de l'environnement de travail au cours du déplacement de l'outil suivant ladite trajectoire cible, dits câbles gênants,
- une étape de calcul, pour chaque câble gênant, des intervalles de collision, correspondant à l'intersection du câble gênant avec la trajectoire cible,
- une étape de détermination, pour chaque intervalle de collision, des câbles qui ne présentent pas d'intersection, dits câbles utiles,
- une étape d'élaboration, pour chaque intervalle de collision, des consignes de commande des actionneurs desdits câbles utiles pour déplacer l'outil mobile le long de la trajectoire cible correspondant à cet intervalle de collision, lesdits actionneurs des câbles gênants sur cette intervalle de collision étant commandés pour rendre ces câbles lâches,
- une étape de mise en œuvre desdites consignes de commande des actionneurs de manière à permettre le déplacement de l'outil mobile dans l'environnement de travail suivant ladite trajectoire cible prédéterminée.

Un procédé de commande selon l'invention permet donc de définir une trajectoire cible de l'outil mobile et d'en déduire la trajectoire articulaire, c'est à dire l'évolution des positions des actionneurs permettant de commander le déplacement de l'outil le long de la trajectoire cible. Cette trajectoire articulaire est définie par la succession des commandes des actionneurs. L'invention permet en outre d'identifier les câbles qui intersectent le volume de n'importe quel objet de l'environnement de travail lors du parcours de l'outil le long de la trajectoire cible. Ces objets peuvent être de tous types. Il peut s'agir de la structure architecturale en cours d'extrusion dans le cas de la mise en œuvre du procédé selon l'invention avec une tête d'extrusion en guise d'outil mobile ou de tout élément faisant parti de l'environnement de travail (poteau, meuble, accessoire, etc.). Pour chaque intervalle de collision, on sélectionne uniquement les câbles utiles, c'est à dire ceux qui ne rencontrent aucun obstacle au cours de cet intervalle de collision. Les câbles gênants sont rendus lâches de manière à ce qu'ils puissent être écartés de l'objet avec lequel ils vont entrer en collision au cours du déplacement de l'outil mobile. Cette commande pour rendre les câbles lâches consiste par exemple à fournir à l'actionneur de ce câble gênant une consigne de longueur de câble supérieure d'une valeur prédéterminée à la consigne de longueur de câble théorique pour ce câble au cours du déplacement de l'outil mobile sur cet intervalle de collision, s'il n'y avait pas de collision.

Certaines des étapes du procédé selon l'invention peuvent être mises en œuvre par un programme informatique exécuté sur un ordinateur, éventuellement après une modélisation de l'environnement de travail, par exemple et non exclusivement l'étape d'élaboration des consignes de commande des actionneurs des câbles.

Avantageusement et selon l'invention, l'étape de définition d'une trajectoire cible de l'outil mobile dans l'environnement de travail est fonction d'un paramètre prédéterminé de trajectoire.

Un tel paramètre de trajectoire est par exemple le temps de déplacement de l'outil mobile. Un tel paramètre de trajectoire peut être d'une manière générale tout paramètre représentatif de l'abscisse curviligne de déplacement de l'outil mobile le long de la trajectoire cible.

Avantageusement et selon l'invention, ladite étape de calcul desdits intervalles de collision, consiste à déterminer, pour chaque câble gênant, des intervalles du paramètre de trajectoire correspondant à l'intersection du câble gênant avec la trajectoire cible.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective d'un robot à câbles selon un mode de réalisation de l'invention,
- la figure 2 est une vue schématique en perspective d'un robot à câble selon un mode de réalisation de l'invention dont un câble rencontre un obstacle au cours du déplacement de la tête d'extrusion portée par l'outil mobile du robot,
- la figure 3 est une vue schématique en perspective d'un robot à câble selon un mode de réalisation de l'invention dont un câble est rendu lâche au cours du déplacement de la tête d'extrusion du robot,
- la figure 4 est une vue schématique en perspective d'un robot à câble selon un mode de réalisation de l'invention dont un câble est écarté de la trajectoire par un dispositif d'escamotage,
- la figure 5 est une vue schématique d'un procédé de commande selon un mode de réalisation de l'invention.

### 6. Description détaillée d'un mode de réalisation de l'invention

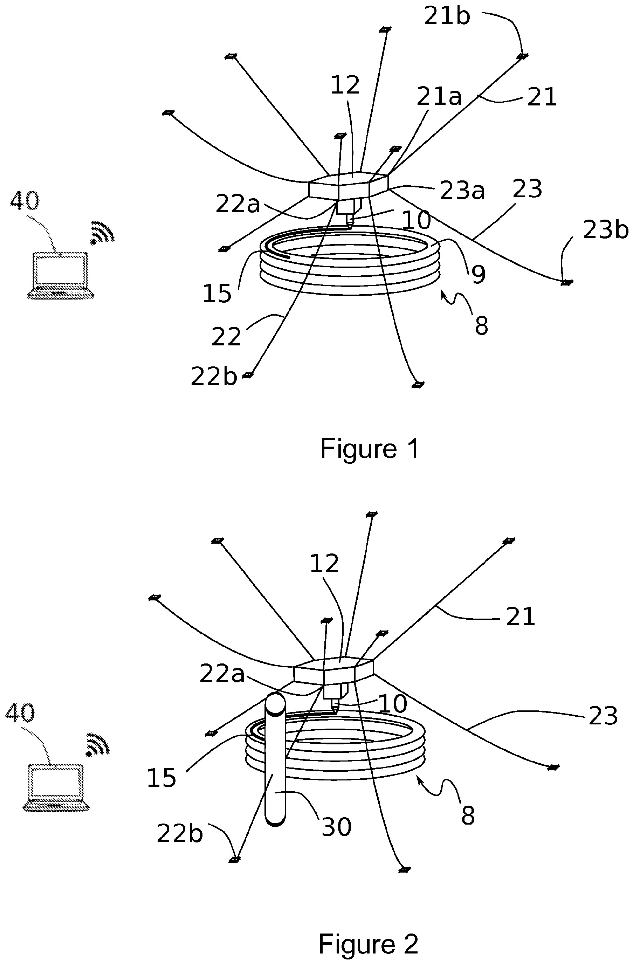

Sur les figures, les échelles et les proportions ne sont pas strictement respectées et ce, à des fins d'illustration et de clarté. Dans toute la description détaillée qui suit en référence aux figures, sauf indication contraire, chaque élément du robot est décrit tel qu'il est agencé lorsque le robot est installé dans un environnement de travail. Cette configuration est notamment représentée sur la figure 1.

En outre, les éléments identiques, similaires ou analogues sont désignés par les mêmes références dans toutes les figures.

Le robot parallèle à câbles représenté sur les figures et décrit dans toute la suite est un robot destiné à la fabrication additive de structures architecturales 8 par empilement de cordons 9 extrudés. A ce titre, l'outil mobile piloté par les câbles comprend une plateforme 12 de support d'une tête d'extrusion 10 de matériaux de construction (par exemple des matériaux cimentaires ou argileux).

Cela étant, un robot à câbles selon l'invention peut aussi être utilisé pour d'autres applications, notamment pour le transport de marchandises. Dans ce cas, l'outil mobile est une plateforme de transport de marchandises. Un robot à câbles selon l'invention peut aussi être utilisé pour toute application pour laquelle un déplacement d'un effecteur quelconque au sein d'un environnement de travail est recherché.

Dans le cas de l'application du robot de fabrication additive, la tête d'extrusion 10 est par exemple alimentée en matériaux cimentaires ou argileux, dits matériaux de construction, par un circuit d'alimentation en matériaux de construction à partir d'un réservoir de stockage de matériaux de construction. Ce circuit d'alimentation et ce réservoir de stockage ne sont pas représentés sur les figures.

Ce réservoir de stockage peut par exemple être formé d'une trémie comprenant une ouverture supérieure adaptée pour recevoir des gâchées de matériaux cimentaires et une sortie inférieure reliée au circuit d'alimentation. La trémie peut en outre être équipé d'un agitateur entrainé en rotation par un moteur électrique pour pouvoir maintenir le matériau cimentaire dans la trémie à un état rhéologique quasi-constant avant d'être conduit vers la tête d'extrusion par le circuit d'alimentation. Ce circuit d'alimentation comprend par exemple une conduite reliant la sortie du réservoir de stockage à la tête d'extrusion et une pompe de gavage configurée pour pouvoir alimenter la conduite en matériau cimentaire.

Dans la suite, seules les caractéristiques de commande et de pilotage des déplacements de la tête d'extrusion 10 selon une trajectoire cible dans un environnement de travail à trois dimensions sont décrites. Cet environnement de travail est par exemple un hangar de fabrication.

Le robot comprend une pluralité de câbles 21, 22, 23 présentant chacun une première extrémité 21a, 22a, 23a reliée à la plateforme 12 de support de la tête d'extrusion 10 et une seconde extrémité 21b, 22b, 23b reliée à un point d'ancrage du hangar. Sur les figures, seuls certains câbles sont référencés à des fins de clarté.

En outre, chaque câble 21, 22, 23 est associé à un actionneur configuré pour pouvoir régler sur commande la longueur du câble 21, 22, 23 s'étendant entre la plateforme 12 et le point d'ancrage de ce câble 21, 22, 23. Un tel actionneur est par exemple un treuil ou un enrouleur de câble associé à un moteur électrique.

Chaque câble est, à un instant donné au cours du déplacement de l'outil mobile le long de la trajectoire cible, soit un câble suspendu 21, soit un câble étai 22, 23. Un câble suspendu 21 présente sa seconde extrémité 21b plus haute que sa première extrémité 21a. Un câble étai 22, 23 présente sa seconde extrémité 22b, 23b plus basse que sa première extrémité 22a, 23a. Autrement dit, un câble suspendu 21 exerce une force de traction vers le haut de la plateforme alors qu'un câble étai 22, 23 exerce une force de traction vers le bas de la plateforme.

Un câble peut être suspendu au cours de certaines portions de trajectoire et étai au cours d'autres portions de trajectoire.

Sur la figure 1, le robot est représenté avec six câbles suspendus et quatre étais, étant entendu que le robot comprend au moins cinq câbles étais de manière à pouvoir piloter la plateforme portant la tête d'extrusion dans toutes les directions de l'environnement de travail. Les câbles étais en arrière plan ne sont pas représentés sur les figures à des fins de clarté. De préférence, le robot comprend au moins dix câbles dont au moins cinq sont des câbles suspendus et au moins cinq sont des câbles étais. Comme indiqué précédemment, certains câbles peuvent faire office de câbles suspendus au cours de certaines portions de trajectoire de l'outil mobile et faire office de câbles étais au cours d'autres portions de trajectoire.

Un robot selon l'invention comprend également une unité de commande 40 configurée pour pouvoir fournir aux actionneurs des câbles 21, 22, 23 des consignes de commande de longueur de câble qui permettent le déplacement de l'outil mobile dans l'environnement de travail suivant la trajectoire cible.

Cette unité de commande 40 peut être réalisée par tous moyens connus, notamment par des moyens analogiques, des moyens numériques, des moyens logiques ou une combinaison de tels moyens. Une telle unité de commande comprend selon un mode de réalisation de l'invention un ordinateur programmable relié aux actionneurs des câbles par un réseau de communication sans fil, par un réseau filaire ou par tous moyens de communication équivalents.

L'unité de commande 40 est programmée pour rendre lâche tout câble, désigné ci-après câble gênant, qui intersecte avec au moins un volume d'au moins un élément de l'environnement de travail au cours du déplacement de l'outil mobile suivant un intervalle de la trajectoire cible, dit intervalle de collision.

Sur les figures 2, 3 et 4, un poteau 30 de l'environnement de travail est représenté.

Comme illustré sur la figure 2, le déplacement de la tête d'extrusion 10 est susceptible de provoquer une collision entre le câble étai 22 et le poteau 30 de l'environnement de travail. L'agencement du câble étai 22 illustré sur la figure 2 est l'agencement théorique du câble tel qu'il serait en l'absence du poteau 30.

Bien entendu, le poteau 30 n'est qu'un exemple de collision possible entre un robot selon l'invention et l'environnement extérieur. La collision peut également être avec la structure architecturale en cours d'extrusion, notamment du fait d'une grande surface au sol de la structure, et la gestion de la collision est alors identique à celle décrite ci-après.

En cas de collision décelée entre un élément de l'environnement de travail (tel que le poteau 30 sur le mode de réalisation des figures) et un câble 22 du robot, l'unité de commande 40 fournit à l'actionneur du câble 22 une consigne de commande de longueur de câble supérieure d'une valeur prédéterminée à la consigne de commande de longueur de câble théorique pour ce câble 22. Cette valeur prédéterminée ajoutée à la longueur de câble théorique est paramétrable et dépend des applications. Selon certains modes de réalisation cette valeur peut varier de telle manière à être strictement positive et adoucir la trajectoire articulaire de l'actionneur concerné. Cela permet avantageusement de rendre son accélération continue.

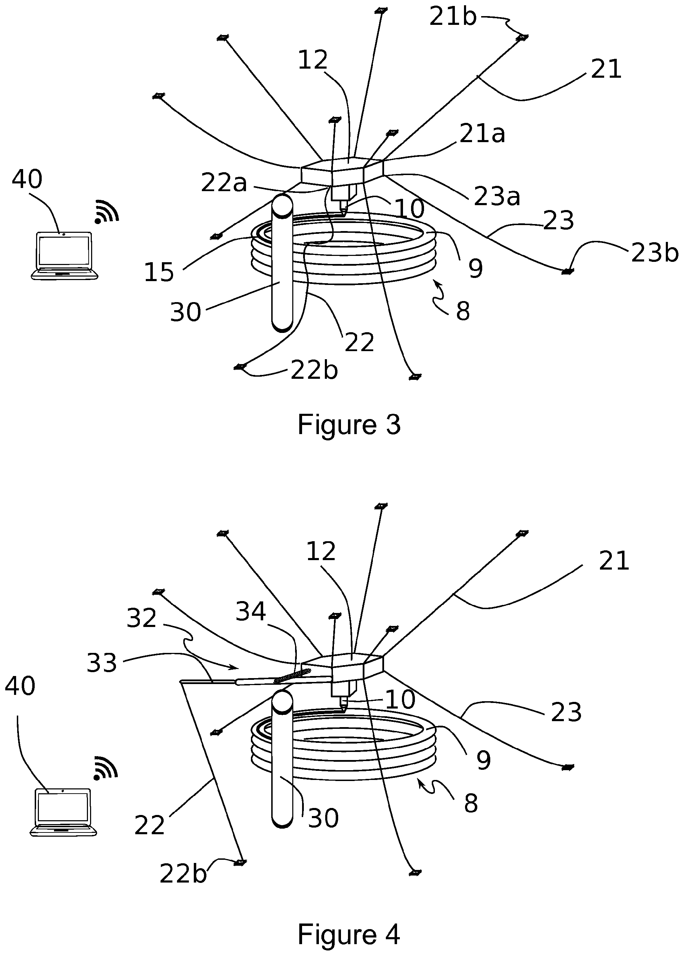

La figure 3 illustre le câble 22 rendu lâche par la commande de longueur de câble fournie par l'unité de commande 40 à l'actionneur de ce câble.

La figure 4 illustre le déplacement de ce câble 22 rendu lâche vers une position de renvoi par un dispositif d'escamotage 32.

Sur la figure 4, seul le câble 22 est associé à un dispositif d'escamotage, étant entendu que selon d'autres modes de réalisation, chaque câble peut être associé à un dispositif d'escamotage de ce câble.

Le dispositif d'escamotage permet de déplacer un câble 22 rendu lâche par l'unité de commande 40 de sa position de service dans laquelle il exerce une force sur la plateforme 12 vers une position de renvoi dans laquelle le câble 22 est écarté de l'environnement.

Pour ce faire et selon le mode de réalisation de la figure 4, le dispositif d'escamotage 32 comprend un tube télescopique 33 porté par la plateforme 12 et enchâssant le câble 22. Ce tube télescopique 33 est en outre relié à la plateforme par un ressort de rappel 34 de sorte que le tube télescopique 33 déplace spontanément le câble 22 dans un plan de renvoi du câble qui s'étend horizontalement depuis la plateforme 12. Ainsi, lorsque le câble 22 est rendu lâche, le dispositif d'escamotage déplace le câble 22 de la trajectoire de la tête d'extrusion et libère donc l'intervalle de collision, ce qui permet le déplacement de la tête d'extrusion 10 le long de la trajectoire cible. Selon d'autres modes de réalisation non représentés, le tube télescopique est remplacé par une gaine flexible à mémoire de forme.

De préférence, le robot comprend cinq câbles étais, ce qui permet à chaque instant de rendre lâche un câble étai, n'importe lequel, tout en conservant une maitrise parfaite et totale des déplacements de la tête d'extrusion 10.

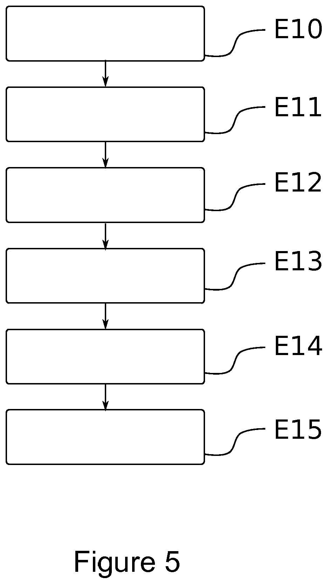

La figure 5 est une vue schématique d'un procédé selon un mode de réalisation de l'invention. Un tel procédé peut par exemple être mis en œuvre par des moyens logiciels.

Le procédé comprend une première étape de définition E10 d'une trajectoire cible de l'outil mobile dans l'environnement de travail. Dans le cas d'un robot configuré pour la fabrication additive d'une structure architecturale par empilement de cordons extrudés, cette étape E10 consiste à déterminer la trajectoire de dépose des cordons. Cette trajectoire cible est par exemple mémorisée dans une mémoire d'un ordinateur accessible par l'unité de commande du robot.

Le procédé comprend une étape subséquente d'identification E11 des câbles qui intersectent avec un volume d'un élément de l'environnement de travail au cours du déplacement de la tête d'extrusion suivant la trajectoire cible. Les câbles identifiés sont désignés comme gênants. Cette étape d'identification peut par exemple être mise en œuvre par un ordinateur après une modélisation de l'environnement de travail et une comparaison de cette modélisation avec la trajectoire cible définie à l'étape E10.

Le procédé comprend une étape subséquente de calcul E12 pour chaque câble gênant identifié, des intervalles de collision correspondant à l'intersection du câble gênant avec la trajectoire cible.

Le procédé comprend une étape subséquente de détermination E13, pour chaque intervalle de collision, des câbles qui ne présentent pas d'intersection, dits câbles utiles. Ces câbles utiles permettent de contrôler le déplacement de la tête d'extrusion sur l'intervalle de collision.

Le procédé comprend une étape subséquente d'élaboration E14, pour chaque intervalle de collision, des consignes de commande des actionneurs des câbles utiles pour déplacer l'outil mobile le long de la trajectoire cible correspondant à cet intervalle de collision. Les consignes pour les actionneurs des câbles gênants consistent à rendre les câbles lâches sur cet intervalle de collision.

Le procédé comprend enfin une étape de mise en œuvre E15 des consignes de commande des actionneurs de manière à permettre le déplacement de l'outil mobile dans l'environnement de travail suivant la trajectoire cible prédéterminée.

Un procédé selon l'invention permet donc de contrôler l'évolution d'un outil mobile dans tout type d'environnement de travail. Un procédé selon l'invention est particulièrement destiné à piloter un robot à câbles dédié à la fabrication additive de structures architecturales par empilement de couches de cordons extrudés. Cela étant, le procédé peut également être mis en œuvre pour d'autres applications, notamment de transport de matériels dans les usines.

## Revendications

1. Robot parallèle à câbles comprenant :
- un outil mobile (10, 12) destiné à être déplacé suivant une trajectoire, dite trajectoire cible (15), dans un environnement de travail à trois dimensions,
- une pluralité de câbles (21, 22, 23) présentant chacun une première extrémité (21a ; 22a ; 23a) adaptée pour pouvoir être reliée à l'outil mobile (10, 12) et une seconde extrémité (21b ; 22b ; 23b) adaptée pour pouvoir être reliée à un point d'ancrage d'une structure fixe agencée au voisinage dudit environnement de travail, et comprenant au moins un câble, dit câble suspendu (21), configuré pour pouvoir être agencé de sorte que ladite seconde extrémité (21b) du câble est plus haute que ladite première extrémité (21a) du câble, et au moins un câble, dit câble étai (22 ; 23), configuré pour pouvoir être agencé de sorte que ladite seconde extrémité du câble (22b ; 23b) est plus basse que ladite première extrémité du câble (22a ; 23a), au cours du déplacement de l'outil mobile suivant au moins une portion de ladite trajectoire cible (15),
- une pluralité d'actionneurs configurés pour pouvoir régler sur commande la longueur des câbles (21, 22, 23) s'étendant entre l'outil mobile (10, 12) et lesdits points d'ancrage,
- une unité de commande (40) configurée pour pouvoir fournir auxdits actionneurs des consignes de commande de longueur de câble qui permettent le déplacement de l'outil mobile (10, 12) dans l'environnement de travail suivant ladite trajectoire cible (15),
**caractérisé en ce que** ladite unité de commande (40) est configurée pour rendre lâche tout câble, dit câble gênant (22), qui intersecte avec au moins un volume (30) d'au moins un élément de l'environnement de travail au cours du déplacement de l'outil mobile (10, 12) suivant un intervalle de ladite trajectoire cible (15), dit intervalle de collision, en fournissant à l'actionneur de ce câble (22) une consigne de commande de longueur de câble supérieure à la longueur de câble théorique pour ce câble gênant au cours du déplacement de l'outil mobile sur cet intervalle de collision.

2. Robot selon la revendication 1, **caractérisé en ce qu'**il comprend, pour au moins un câble, un dispositif d'escamotage (32) de ce câble d'une position de service dans laquelle le câble exerce une force sur ledit outil mobile (10, 12) permettant son déplacement le long de ladite trajectoire cible (15), vers une position de renvoi dans laquelle le câble est écarté de l'environnement de travail lorsque ce câble est rendu lâche par ladite unité de commande (40).

3. Robot selon la revendication 2, **caractérisé en ce que** dans ladite position de renvoi, ledit câble (22) se déploie au moins en partie dans un plan de renvoi horizontal qui s'étend de l'outil mobile (10, 12) si le câble est un câble étai et dans un plan de renvoi vertical qui s'étend de l'outil mobile si le câble est un câble suspendu.

4. Robot selon l'une des revendications 2 ou 3, **caractérisé en ce que** ledit dispositif d'escamotage (32) comprend un tube télescopique (33) porté par l'outil mobile (10, 12) enchâssant le câble (22) et relié audit outil mobile par un ressort de rappel (34) de sorte que le tube télescopique (33) déplace spontanément le câble (22) dans le plan de renvoi lorsque ledit câble est rendu lâche.

5. Robot selon l'une des revendications 1 à 4, **caractérisé en ce qu'**il comprend au moins cinq câbles étais (22, 23) de manière à pouvoir rendre lâche au moins un câble étai tout en conservant la possibilité de commander un déplacement dudit outil mobile dans tout plan horizontal selon les deux directions de ce plan.

6. Robot selon l'une des revendications 1 à 5, **caractérisé en ce qu'**il comprend au moins cinq câbles étais et au moins cinq câbles suspendus.

7. Robot selon l'une des revendications 1 à 6, **caractérisé en ce que** lesdits actionneurs sont des enrouleurs de câbles.

8. Robot selon l'une des revendications 1 à 7, **caractérisé en ce qu'**il comprend en outre des capteurs de position des câbles reliés à ladite unité de commande (40) de manière à pouvoir asservir la position de l'outil mobile.

9. Robot selon l'une des revendications 1 à 8, **caractérisé en ce que** ledit outil mobile comprend une plateforme (12) et un effecteur.

10. Robot selon la revendication 9, **caractérisé en ce que** ledit effecteur est une tête d'extrusion (10) de matériaux de construction pour la fabrication additive de structures architecturales (8) par empilement de couches de cordons (9) extrudés par cette tête.

11. Procédé de commande d'un robot à câbles selon l'une des revendications 1 à 10, comprenant les étapes suivantes :
- une étape de définition (E10) d'une trajectoire cible de l'outil mobile dans l'environnement de travail,
- une étape d'identification (E11) des câbles, qui intersectent avec au moins un volume d'au moins un élément de l'environnement de travail au cours du déplacement de l'outil suivant ladite trajectoire cible, dits câbles gênants,
- une étape de calcul (E12), pour chaque câble gênant, des intervalles de collision, correspondant à l'intersection du câble gênant avec la trajectoire cible,
- une étape de détermination (E13), pour chaque intervalle de collision, des câbles qui ne présentent pas d'intersection, dits câbles utiles,
- une étape d'élaboration (E14), pour chaque intervalle de collision, des consignes de commande des actionneurs desdits câbles utiles pour déplacer l'outil mobile le long de la trajectoire cible correspondant à cet intervalle de collision, lesdits actionneurs des câbles gênants sur cet intervalle de collision étant commandés pour rendre ces câbles lâches,
- une étape de mise en œuvre (E15) desdites consignes de commande des actionneurs de manière à permettre le déplacement de l'outil mobile dans l'environnement de travail suivant ladite trajectoire cible prédéterminée.

12. Procédé de commande selon la revendication 11, **caractérisé en ce que** l'étape de définition (E10) d'une trajectoire cible de l'outil mobile dans l'environnement de travail est fonction d'un paramètre prédéterminé de trajectoire.

13. Procédé de commande selon la revendication 12, **caractérisé en ce que** ladite étape de calcul (E12) desdits intervalles de collision, consiste à calculer, pour chaque câble gênant, des intervalles du paramètre de trajectoire correspondant à l'intersection du câble gênant avec la trajectoire cible.

14. Procédé selon l'une des revendications 12 ou 13, **caractérisé en ce que** ledit paramètre prédéterminé de trajectoire est le temps de déplacement de l'outil mobile suivant ladite trajectoire cible.

## Patentansprüche

1. Paralleler Kabelroboter, umfassend:
- ein mobiles Werkzeug (10, 12), das dazu bestimmt ist, in einer dreidimensionalen Arbeitsumgebung entlang einer Bahn, Zielbahn (15) genannt, bewegt zu werden,
- mehrere Kabel (21, 22, 23), die jeweils aufweisen, ein erstes Ende (21a; 22a; 23a), das angepasst ist, dass es mit dem mobilen Werkzeug (10, 12) verbunden werden kann, und ein zweites Ende (21b; 22b; 23b), das angepasst ist, mit einem Ankerpunkt einer festen Struktur verbunden zu werden, die in der Nähe der Arbeitsumgebung angeordnet ist, und welche mindestens ein Kabel umfassen, worin das hängende Kabel (21) derart ausgestaltet ist, dass es so angeordnet werden kann, dass das zweite Ende (21b) des Kabels höher ist als das erste Ende (21a) des Kabels, und mindestens ein Kabel, worin das Schrägseil (22; 23), derart ausgestaltet ist, dass es so angeordnet werden kann, dass das zweite Ende des Kabels (22b; 23b) niedriger ist als das erste Ende des Kabels (22a; 23a), während der Bewegung des mobilen Werkzeugs, die zumindest einem Teil des Zielpfads (15) folgt,
- eine Vielzahl von Aktuatoren, die ausgestaltet sind, dass sie auf Anforderung die Länge der Kabel (21, 22, 23), die sich zwischen dem mobilen Werkzeug (10, 12) und den Ankerpunkten erstrecken, einstellen können,
- eine Steuereinheit (40), die ausgestaltet ist, dass sie die Aktuatoren mit Kabellängen-Steuerbefehlen versorgen kann, die die Bewegung des mobilen Werkzeugs (10, 12) in der Arbeitsumgebung entlang des Zielpfads (15) ermöglichen,
**dadurch gekennzeichnet, dass** die Steuereinheit (40) ausgestaltet ist, jedes Kabel, das störende Kabel (22), das sich mit mindestens einem Volumen (30) des mindestens einen Elements der Arbeitsumgebung während der Bewegung des mobilen Werkzeugs (10, 12) entlang eines Bereichs der Zielbahn (15), dem Kollisionsbereich, überschneidet, freizugeben, indem dem Aktuator dieses Kabels (22) ein Kabellängen-Steuerbefehl geliefert wird, der größer ist als die theoretische Kabellänge des störenden Kabels während der Bewegung des mobilen Werkzeugs über dieses Kollisionsbereich.

2. Roboter nach Anspruch 1, **dadurch gekennzeichnet, dass** er für mindestens ein Kabel eine Vorrichtung (32) zum Zurückziehen dieses Kabels aus einer Betriebsposition, in der das Kabel eine Kraft auf das bewegliche Werkzeug (10, 12) ausübt, die seine Verschiebung entlang der Zielbahn (15) ermöglicht, in eine Rückführposition umfasst, in der das Kabel von der Arbeitsumgebung wegbewegt wird, wenn dieses Kabel durch die Steuereinheit (40) gelöst wird.

3. Roboter nach Anspruch 2, **dadurch gekennzeichnet, dass** sich das Kabel (22) in der Rückführposition zumindest teilweise in einer horizontalen Rückführebene, die sich von dem beweglichen Werkzeug (10, 12) aus erstreckt, entfaltet, wenn das Kabel ein Vorstagkabel ist, und in einer vertikalen Umlenkebene, die sich von dem beweglichen Werkzeug aus erstreckt, wenn das Kabel ein Hängekabel ist.

4. Roboter nach einem der Ansprüche 2 oder 3, **dadurch gekennzeichnet, dass** die Einziehvorrichtung (32) ein von dem beweglichen Werkzeug (10, 12) getragenes Teleskoprohr (33) umfasst, das das Kabel (22) umgibt und mit dem Werkzeug durch eine Rückholfeder (34) beweglich verbunden ist, so dass das Teleskoprohr (33) das Kabel (22) spontan in der Umlenkebene bewegt, wenn das Kabel gelöst wird.

5. Roboter nach einem der Ansprüche 1 bis 4, **dadurch gekennzeichnet, dass** er mindestens fünf Schrägseile (22, 23) umfasst, um mindestens ein Schrägseil lösen zu können und dabei die Möglichkeit zu behalten, eine Bewegung des Werkzeugs, beweglich in jeder horizontalen Ebene in beiden Richtungen dieser Ebene, zu steuern.

6. Roboter nach einem der Ansprüche 1 bis 5, **dadurch gekennzeichnet, dass** er mindestens fünf Stützenkabel und mindestens fünf Hängekabel umfasst.

7. Roboter nach einem der Ansprüche 1 bis 6, **dadurch gekennzeichnet, dass** die Aktoren Kabeltrommeln sind.

8. Roboter nach einem der Ansprüche 1 bis 7, **dadurch gekennzeichnet, dass** er ferner Positionssensoren der Kabel umfasst, die mit der Steuereinheit (40) verbunden sind, um die Position des mobilen Werkzeugs steuern zu können.

9. Roboter nach einem der Ansprüche 1 bis 8, **dadurch gekennzeichnet, dass** das mobile Werkzeug eine Plattform (12) und einen Effektor umfasst.

10. Roboter nach Anspruch 9, **dadurch gekennzeichnet, dass** der Effektor ein Extrusionskopf (10) für Baumaterialien zur additiven Herstellung architektonischer Strukturen (8) durch Stapeln von Schichten aus Schnüren (9) ist, die von diesem Kopf extrudiert werden.

11. Verfahren zur Steuerung eines Seilroboters nach einem der Ansprüche 1 bis 10, welches die folgenden Schritte umfassent:
- einen Schritt des Definierens (E10) einer Zielbewegungsbahn des mobilen Werkzeugs in der Arbeitsumgebung,
- einen Schritt des Identifizierens (E11) der Kabel, die sich während der Bewegung des Werkzeugs entlang der Zielbahn mit mindestens einem Volumen mindestens eines Elements der Arbeitsumgebung kreuzen, als störende Kabel bezeichnet,
- einen Schritt des Berechnens (E12), für jedes störende Kabel, von Kollisionsintervallen, die dem Schnittpunkt des störenden Kabels mit der Zielbewegungsbahn entsprechen,
- einen Schritt zum Bestimmen (E13), für jedes Kollisionsintervall, der Kabel, die keinen Schnittpunkt haben, als nützliche Kabel bezeichnet,
- einen Entwicklungsschritt (E14) für jeden Kollisionsbereich der Steuerbefehle der Aktuatoren der nützlichen Kabel, um das bewegliche Werkzeug entlang der diesem Kollisionsbereich entsprechenden Zielbahn zu bewegen, wobei die Aktuatoren der störenden Kabel gesteuert werden, um diese Kabel freizumachen,
- einen Implementierungsschritt (E15) der Steueranweisungen der Aktuatoren, um eine Bewegung des mobilen Werkzeugs in der Arbeitsumgebung entlang des vorbestimmten Zielpfads zu ermöglichen.

12. Steuerverfahren nach Anspruch 11, **dadurch gekennzeichnet, dass** der Schritt des Definierens (E10) einer Zielbewegungsbahn des mobilen Werkzeugs in der Arbeitsumgebung eine Funktion eines bestimmten Bewegungsbahn-Parameters ist.

13. Steuerverfahren nach Anspruch 12, **dadurch gekennzeichnet, dass** der Schritt des Berechnens (El 2) der Kollisionsbereiche darin besteht, für jedes störende Kabel Bereiche des Bahnparameters zu berechnen, die dem Schnittpunkt des störenden Kabels mit der Zielbewegungsbahn entsprechen.

14. Verfahren nach einem der Ansprüche 12 oder 13, **dadurch gekennzeichnet, dass** der bestimmte Bahnparameter die Fahrzeit des mobilen Werkzeugs entlang der Zielbahn ist.

## Claims

1. Parallel cable robot comprising:
- a mobile tool (10, 12) intended to be moved along a path, called the target path (15), in a three-dimensional working environment,
- a plurality of cables (21, 22, 23) each having a first end (21a ; 22a; 23a) adapted to be able to be connected to the mobile tool (10, 12) and a second end (21b; 22b; 23b) adapted to be able to be connected to an anchor point of a fixed structure arranged in the vicinity of said working environment, and comprising at least one cable, said suspended cable (21), configured to be able to be arranged so that said second end (21b) of the cable is higher than said first end (21a) of the cable, and at least one cable, said stay cable (22; 23), configured to be able to be arranged so that said second end of the cable (22b; 23b) is lower than said first end of the cable (22a; 23a), during movement of the mobile tool following at least a portion of said target path (15) ,
- a plurality of actuators configured to be able to adjust on command the length of the cables (21, 22, 23) extending between the mobile tool (10, 12) and said anchor points,
- a control unit (40) configured to be able to provide said actuators with cable length control instructions which allow the movement of the mobile tool (10, 12) in the working environment along said target path (15), **characterized in that** said control unit (40) is configured to release any cable, said annoying cable (22), which intersects with at least one volume (30) of at least one element of the working environment during the movement of the mobile tool (10, 12) along an interval of said target trajectory (15), said collision interval, by supplying the actuator of this cable (22) with a cable length control instruction greater than the theoretical cable length for this interfering cable during the movement of the mobile tool over this collision interval.

2. Robot according to Claim 1, **characterized in that** it comprises, for at least one cable, a device (32) for retracting this cable from a service position in which the cable exerts a force on said mobile tool (10, 12) allowing its displacement along said target path (15), towards a return position in which the cable is moved away from the working environment when this cable is made loose by said control unit (40).

3. Robot according to claim 2, **characterized in that** in said return position, said cable (22) deploys at least partly in a horizontal return plane which extends from the movable tool (10, 12) if the cable is a forestay cable and in a vertical deflection plane which extends from the mobile tool if the cable is a suspended cable.

4. Robot according to one of claims 2 or 3, **characterized in that** said retraction device (32) comprises a telescopic tube (33) carried by the mobile tool (10, 12) encasing the cable (22) and connected to said tool movable by a return spring (34) so that the telescopic tube (33) spontaneously moves the cable (22) in the deflection plane when said cable is made loose.

5. Robot according to one of claims 1 to 4, **characterized in that** it comprises at least five stay cables (22, 23) so as to be able to release at least one stay cable while retaining the possibility of controlling a movement of said tool. mobile in any horizontal plane in both directions of this plane.

6. Robot according to one of claims 1 to 5, **characterized in that** it comprises at least five prop cables and at least five suspended cables.

7. Robot according to one of claims 1 to 6, **characterized in that** said actuators are cable reels.

8. Robot according to one of claims 1 to 7, **characterized in that** it further comprises position sensors of the cables connected to said control unit (40) so as to be able to control the position of the mobile tool.

9. Robot according to one of claims 1 to 8, **characterized in that** said mobile tool comprises a platform (12) and an effector.

10. Robot according to Claim 9, **characterized in that** the said effector is an extrusion head (10) of construction materials for the additive manufacturing of architectural structures (8) by stacking layers of cords (9) extruded by this head.

11. Method for controlling a cable robot according to one of claims 1 to 10, comprising the following steps:
- a step of defining (E10) a target trajectory of the mobile tool in the work environment,
- a step of identifying (El i) the cables, which intersect with at least one volume of at least one element of the working environment during the movement of the tool along said target path, known as annoying cables,
- a step of calculating (E12), for each interfering cable, collision intervals, corresponding to the intersection of the interfering cable with the target trajectory,
- a step of determining (E13), for each collision interval, the cables which do not have an intersection, known as useful cables,
- a development step (E14), for each collision interval, of the control instructions of the actuators of said cables useful for moving the mobile tool along the target path corresponding to this collision interval, said actuators of the cables interfering with this collision interval being controlled to make these cables loose,
- an implementation step (E15) said actuator control instructions so as to allow movement of the mobile tool in the working environment along said predetermined target path.

12. Control method according to Claim 11, **characterized in that** the step of defining (E10) a target trajectory of the mobile tool in the working environment is a function of a predetermined trajectory parameter.

13. Control method according to claim 12, **characterized in that** said step of calculating (E1 2) of said collision intervals consists of calculating, for each interfering cable, intervals of the path parameter corresponding to the intersection of the interfering cable with the target trajectory.

14. Method according to one of Claims 12 or 13, **characterized in that** the said predetermined path parameter is the travel time of the mobile tool along the said target path.
